# EUROPEAN PATENT SPECIFICATION

(11) **EP 3 783 355 B1**
(45) Date of publication and mention of the grant of the patent: **21.10.2026**
(21) Application number: 20176628.4
(22) Date of filing: 26.05.2020
(51) Int. Cl.: G01N 27/41, G01N 27/417

(54) **METHOD AND SENSOR ASSEMBLY FOR ESTIMATING GAS PARTIAL PRESSURE**
VERFAHREN UND SENSORVORRICHTUNG ZUR BESTIMMUNG DES GASPARTIALDRUCKS
PROCÉDÉ ET DISPOSITIF DE CAPTEUR POUR LA DÉTERMINATION DE LA PRESSION PARTIELLE DU GAZ

(30) Priority: 21.08.2019 EP 19192901
(43) Date of publication of application: 24.02.2021
(73) Proprietor: Siemens Aktiengesellschaft, 80333 München (DE)
(72) Inventor: Baader, Mathias, 76437 Rastatt (DE); Spitznas, Armin, 77975 Ringsheim (DE); Weida, Simon, 76131 Karlsruhe (DE)
(74) Representative: Siemens Patent Attorneys

(56) References cited:
- EP-A2- 0 964 246
- WO-A1-2018/198568
- DE-A1- 102007 062 800
- DE-A1- 102014 211 321
- US-A1- 2020 123 959

## Description

### Background

The present disclosure relates to measurements of partial pressure. More particularly, the present disclosure focuses on measurements of oxygen partial pressure in combustion appliances.

Combustion appliances such as gas burners can employ gas sensors to monitor oxygen. Measurements of oxygen concentration can then be employed for control of fuel-air ratio during combustion. Sensors based on zirconium dioxide are commonly employed to measure oxygen in combustion appliances.

Known sensors based on zirconium dioxide often comprise a sensing disk and a pumping disk. The pumping disk connects to a pump terminal and the sensing disk connects to a sense terminal. A sealed chamber and a reference terminal are arranged between the pumping disk and the sensing disk. The reference terminal can be annular thereby enveloping the sealed chamber.

A first voltage between the reference terminal and the pump terminal facilitates transportation of oxygen to or from the sealed chamber. The direction of flow of oxygen to and from the sealed chamber can be reversed by changing the polarity of the voltage at the pump terminal. A Nernst voltage builds up between the reference terminal and the sense terminal due to different chemical activities of oxygen on either side of the sensing disk.

Oxygen is pumped into a sealed chamber and is pumped out of the sealed chamber during a measurement cycle. The partial pressure of a gas can then be derived from an amount of time required to reach a predetermined change in Nernst voltage. The latter is measured at the sense terminal with respect to the reference terminal.

EP3008460B1 deals with a gas sensor for measuring different gases. The gas sensor 1 as claimed in EP3008460B1 is based on zirconium dioxide (ZrO₂) as a solid-state electrolyte. The sensor 1 comprises three electrodes 5a, 5b, 6. Two out of these electrodes 5a, 5b are made of doped platinum comprising between 0.5 percent by weight and 15 percent by weight of zirconium dioxide. A third electrode 6 as claimed may in a first embodiment comprise 85 percent by weight of gold and 15 percent by weight of platinum. The third electrode 6 as claimed may in a second embodiment comprise gold and platinum wherein the ratio of gold to platinum is 85 percent to 15 percent. In addition to those 85 percent and 15 percent, the second embodiment may comprise between 0.5 percent by weight and 15 percent by weight of zirconium dioxide.

EP2226629A1 deals with a gas sensor comprising a solid electrolyte disk and three porous metallic electrodes. The sensor of EP2226629A1 is made up of a heating element and of an electrochemical oxygen pump element. The heating element affords control of the sensitivity of the sensor to various species of gases. The electrochemical oxygen pump element comprises a zirconium dioxide (ZrO₂) solid-state electrolyte. An outer electrode of the sensor is made of platinum and of another precious metal component such as gold, silver, palladium, rhodium, ruthenium. In a special embodiment, the precious metal component is gold, silver, or ruthenium. The sensor of EP2226629A1 also comprises a substrate made of aluminum oxide (Al₂O₃). A sealed chamber is interposed between the aluminum oxide substrate and the zirconium dioxide solid-state electrolyte.

WO2018/198568A1 deals with a control device.

DE102007062800A1 deals with determining a gas mixture inside a measurement chamber.

EP0964246A2 deals with an internally calibrated oxygen sensor, with a method and with a system.

The present disclosure improves on measurements of oxygen partial pressure in combustion appliances.

The instant disclosure also alleviates calibration.

### Summary

The present disclosure provides a method of measuring a partial pressure outside a gas sensor and also provides a sensor assembly therefor. The method of the present invention is defined in claim 1. The gas sensor of the present invention is defined in claim 12. Unlike solutions known in the prior art, the approach of the instant disclosure does not rely on predetermined Nernst voltages to determine durations of cycles. Instead of predetermined voltages, the present disclosure relies on predetermined amounts of transferred charge. A first amount of charge is thus transferred into the sealed chamber or out of the sealed chamber, respectively. A first partial pressure consequently builds up inside a sealed chamber of a gas sensor. Upon completion of the first charge transfer, the system stays idle during a settling time. A first Nernst voltage is subsequently measured between the terminals of the gas sensor. After the first voltage measurement, a second amount of charge is transferred out of the sealed chamber or into the sealed chamber, respectively. Upon completion of the second charge transfer, the system again stays idle during a settling time. A second Nernst voltage is subsequently measured between the terminals of the gas sensor. The amounts of charge are adjusted in order to achieve same partial pressures inside of the sealed chamber before and after two consecutive charge transfers.

The method and the sensor assembly of the instant disclosure leverage the tightness of a sealed chamber inside a gas sensor. In spite of small or even negligible leakages of the sealed chamber, partial pressures of a gaseous fluid can be maintained at substantially the same level during the measurements. Small differences in pressures inside and outside the sealed chamber further reduce leakages. The method and the sensor assembly thus alleviate inaccuracies caused by leakages to and from the sealed chamber.

A properly sealed chamber affords measurements also at elevated pressures inside the chamber. Measurements at elevated pressures are advantageous in environments with high concentrations of oxygen.

It is a related object of the instant disclosure to provide a method and a sensor assembly, wherein the method and the sensor assembly accommodate for small leakages from a sealed chamber.

It is also an object of the present disclosure to provide a method and a sensor assembly, wherein the method and the sensor assembly harness a digital controller to precisely calculate a partial pressure of a gaseous fluid. It is also an object of the present disclosure to provide a method and a sensor assembly, wherein the method and the sensor assembly fully harness arithmetic functions of a controller to precisely calculate a partial pressure of a gaseous fluid.

It is still an object of the present disclosure to provide a method and a sensor assembly, wherein the method and the sensor assembly rely on signal processing to enhance signals from a gas sensor.

It is still further an object of the instant disclosure to provide a method and a sensor assembly, wherein the method and the sensor assembly afford compensation for ambient influences.

It is also an object of the present disclosure to provide a sensor assembly that is suitable for cost-effective and/or industrial and/or large-scale manufacture.

### Brief description of the drawings

Various features will become apparent to those skilled in the art from the following detailed description of the disclosed non-limiting embodiments. The drawings that accompany the detailed description can be briefly described as follows:
FIG 1 schematically illustrates a gas sensor based on a solid-state electrolyte.
FIG 2 schematically shows a gas sensor connected to a constant current source and to a voltage meter.
FIG 3 depicts the sensor assembly connected to an amplifier and to an analog-to-digital converter.
FIG 4 shows the sensor assembly having an additional ambient sensor for compensation purposes.

### Detailed description

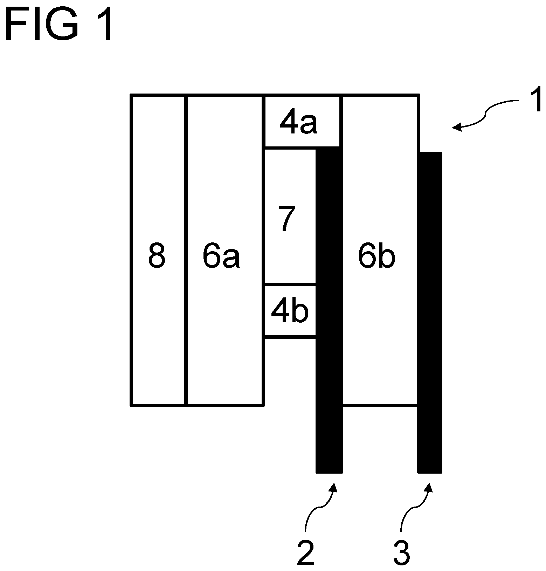

FIG 1 shows a gas sensor 1 according to the instant disclosure. The gas sensor 1 comprises a reference terminal 2 and a pump and sense terminal 3.

A first sensor disk 6a can be made of zirconium dioxide (ZrO₂). In an embodiment, the first sensor disk 6a is made of at least ninety percent by weight of zirconium dioxide. The remainder comprises at least one further element from the group consisting of yttrium oxide and hafnium oxide.

The reference terminal 2 electrically and mechanically connects to a first side of a second sensor disk 6b. The first side of the second sensor disk 6b faces the first sensor disk 6a.

The pump and sense terminal 3 electrically and mechanically connects to a second side of the second sensor disk 6b. The second side of the second sensor disk 6b is disposed opposite the first side of the second sensor disk 6b.

The second sensor disk 6b is preferably made of zirconium dioxide (ZrO₂). In an embodiment, the second sensor disk 6b is made of at least ninety percent by weight of zirconium dioxide. The remainder comprises at least one further element from the group consisting of yttrium oxide and hafnium oxide.

The first sensor disk 6a, the second sensor disk 6b, a spacer 4a, 4b, and the reference electrode 2 enclose a sealed chamber 7. The first sensor disk 6a, the second sensor disk 6b, and the spacer 4a, 4b, and the reference electrode 2 seal the chamber 7 from the ambient. The spacer 4a, 4b separates the first sensor disk 6a from the second sensor disk 6b. The spacer 4a, 4b can, by way of non-limiting example, be made of glass.

In an embodiment, the spacer 4a, 4b is an annular spacer. The annular spacer 4a, 4b is arranged as a single member between the first sensor disk 6a and the second sensor disk 6b.

In an alternate embodiment, the first sensor disk 6a, the second sensor disk 6b, a plurality of spacers 4a, 4b, and the reference electrode 2 enclose the sealed chamber 7. The first sensor disk 6a, the second sensor disk 6b, and the plurality of spacers 4a, 4b, and/or the reference electrode 2 seal the chamber 7 from the ambient. The plurality of spacers 4a, 4b separates the first sensor disk 6a and the second sensor disk 6b. The plurality of spacers 4a, 4b can, by way of non-limiting example, be made of glass.

An outer disk 8 is mounted to the first sensor disk 6a. The outer disk 8 can, by way of non-limiting example, be made of aluminum oxide ceramics (Al₂O₃). According to a special embodiment, the outer disk 8 is made of aluminum oxide ceramics with more than ninety-two percent purity. In a preferred embodiment, the outer disk 8 is made of aluminum oxide with ninety-six percent purity. In yet another embodiment, aluminum oxide with purity above ninety-nine percent is employed. Higher levels of purity offer benefits in terms of mechanical tightness, mechanical brittleness, and dielectric strength. According to an aspect, the outer disk 8 and first sensor disk 6a are joined by ceramic adhesives.

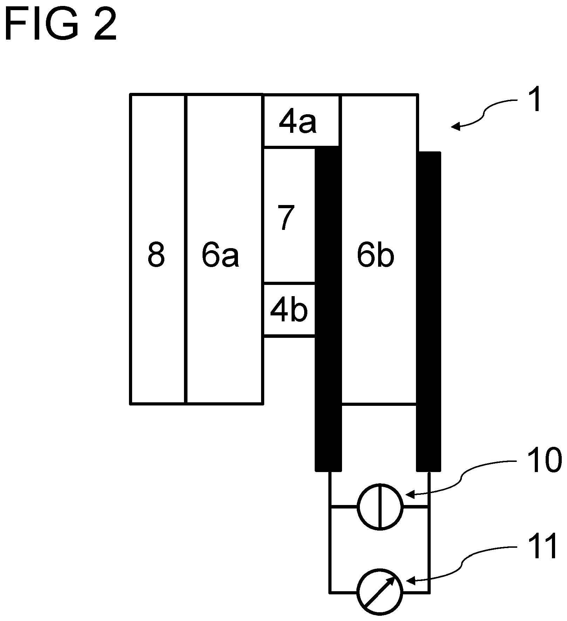

Unlike known measurements, the approach of the present disclosure does not rely on predefined Nernst voltages and on measured durations of currents between such Nernst voltages. Instead of predefined voltages, the present disclosure relies on predefined amounts of electric charge. A first predefined amount of electric charge is transferred using the current source 10 shown in FIG 2. In an embodiment, the first predefined amount of electric charge is transferred by applying a first current during a first predefined amount of time. A second predefined amount of electric charge then gets transferred. In an embodiment, the second predefined amount of electric charge is transferred by applying a second current during a second predefined amount of time. In this context, predefined does not necessarily mean constant over time.

In steady state, the first amount of electric charge and the second amount of electric charge substantially add up to zero. Due to small leakages to and from the sealed chamber 7, the absolute values of the two amounts of electric charge may differ by less than twenty percent, preferably by less than ten percent, or even by less than five percent.

Transfers of predetermined amounts of electric charge enable predetermined partial pressures inside the sealed chamber 7. Transfers of predetermined amounts of electric charge advantageously afford predetermined oxygen (O₂) partial pressures inside the sealed chamber 7.

After each transfer of electric charge, the system is idle to allow for settling time. A voltage between the terminals 2, 3 is then measured. To that end, FIG 2 depicts a voltage meter 11. The measured voltage corresponds to a Nernst voltage *V_{N}*. The measured voltage is caused by different chemical activities inside the sealed chamber 7 and outside the gas sensor 1. Given the Nernst voltages *V_{N,1}* = *V_{N}*(t₁) and *V_{N,2} = V_{N}*(t₂) before and after transferring a predetermined amount of charge the pressure *p_{outside}* outside the gas sensor 1 is determined as follows: ${p}_{outside} = \frac{R ⋅ T {\int }_{{t}_{1}}^{{t}_{2}} {i}_{pump} \left(t\right) dt}{F ⋅ z ⋅ {V}_{chamber}} ⋅ \frac{1}{\left({e}^{\left(\frac{- {V}_{N , 2} ⋅ z ⋅ F}{R ⋅ T}\right)}-{e}^{\left(\frac{- {V}_{N , 1} ⋅ z ⋅ F}{R ⋅ T}\right)}\right)}$ In this equation,
*R* denotes the molar gas constant (*R* ≈ 8.3 *Joule*/(*Kelvin · mol*)),
*T* denotes absolute temperature (*Kelvin*),
*F* denotes the Faraday constant (*F* ≈ 96486 *Amperes* · *seconds*/*mol*),
*z* denotes the charge number, *z* = 4 for oxygen ions,
*V_{chamber}* denotes the volume of the sealed chamber (7), and
*iₚᵤₘₚ*(*t*) denotes the first and second electric currents, respectively. This current may be constant while transferring charge or even time dependent.

Also, the pressure *p_{inside}* inside the sealed chamber (7) is determined as follows: ${p}_{inside} = {p}_{outside} ⋅ {e}^{\frac{- {V}_{N , 2} ⋅ z ⋅ F}{R ⋅ T}} = \frac{R ⋅ T {\int }_{{t}_{1}}^{{t}_{2}} {i}_{pump} \left(t\right) dt}{F ⋅ z ⋅ {V}_{chamber}} ⋅ \frac{1}{\left(1-{e}^{\left(\frac{\left({V}_{N , 2}-{V}_{N , 1}\right) ⋅ z ⋅ F}{R ⋅ T}\right)}\right)}$

If the transferred electric charge ${\int }_{{t}_{1}}^{{t}_{2}} {i}_{pump} \left(t\right) dt$*,* the temperature and the chamber volume as well as the natural constants are known, it is possible to determine *p_{inside}* from the voltage difference *V*_{*N,*2} - *V*_{*N*,1}. Therefore, controlling *p_{inside}* is equivalent to controlling the offset voltage, which is defined by the difference *V*_{*N*,2} - *V*_{*N*,1}.

Where a constant electric current *Iₚᵤₘₚ* is applied during a predetermined time *tₚᵤₘₚ*, the above equation can be simplified as: ${p}_{outside} = \frac{R ⋅ T ⋅ {I}_{pump} ⋅ {t}_{pump}}{F ⋅ z ⋅ {V}_{chamber}} ⋅ \frac{1}{\left({e}^{\left(\frac{- {V}_{N , 2} ⋅ z ⋅ F}{R ⋅ T}\right)}-{e}^{\left(\frac{- {V}_{N , 1} ⋅ z ⋅ F}{R ⋅ T}\right)}\right)}$

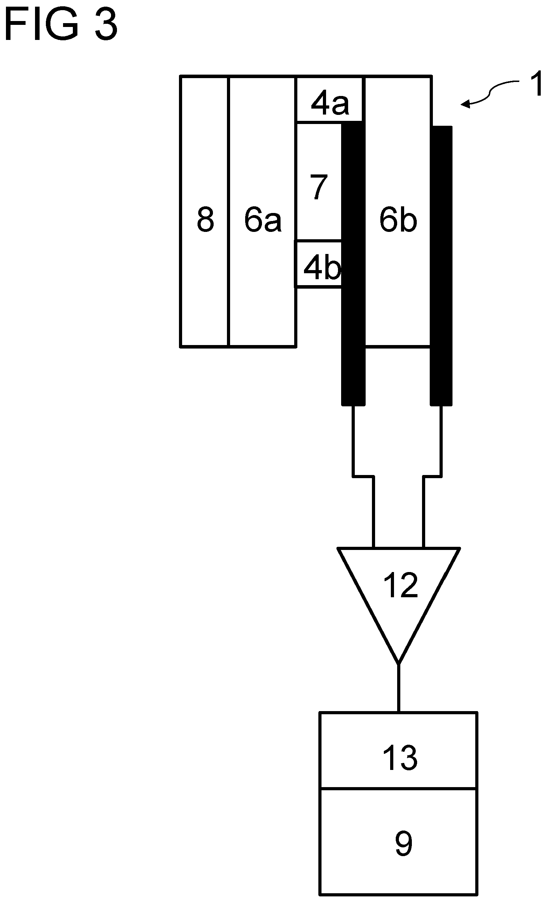

In a practical embodiment, the voltage signal between the terminals 2 and 3 can be amplified using an amplifier 12 as shown on FIG 3. The amplifier 12 preferably is an operational amplifier. The amplifier 12 advantageously has an input resistance of at least five hundred kiloOhms, preferably of at least one MegaOhm, yet more preferably of at least two MegaOhms.

An analog-to-digital converter 13 reads an amplified Nernst voltage from the amplifier 12. The analog-to-digital converter 13 converts the amplified Nernst voltage into a digital representation. The digital representation of the amplified Nernst voltage can then be processed by the controller 9.

It is envisaged that the controller 9 is or comprises a microcontroller. It is also envisaged that the controller 9 is a microprocessor, a digital signal processor (DSP), a field programable gate array (FPGA), or any other device for digital or hybrid signal processing. It is still envisaged that the controller 9 comprises a microprocessor, a digital signal processor (DSP), a field programable gate array (FPGA), or any other device for digital or hybrid signal processing.

In a compact embodiment, the analog-to-digital converter 13 is an integral part of the controller 9. That is, the analog-to-digital converter 13 and the controller 9 are arranged on the same system-on-a-chip. In a special embodiment, the analog-to-digital converter 13 is an integral part of the controller 9, the controller 9 being a microcontroller. That is, the analog-to-digital converter 13 and the microcontroller are arranged on the same system-on-a-chip.

In a sophisticated embodiment, conversion of the analog amplified signal to a digital representation involves sigma-delta modulation. The converter 13 can then comprise a sigma-delta modulation circuit.

In a compact embodiment, the sigma-delta modulation circuit is an integral part of the controller 9. That is, the sigma-delta modulation circuit and the controller 9 are arranged on the same system-on-a-chip. In a special embodiment, the sigma-delta modulation circuit is an integral part of the controller 9, the controller 9 being a microcontroller. That is, the sigma-delta modulation circuit and the microcontroller are arranged on the same system-on-a-chip.

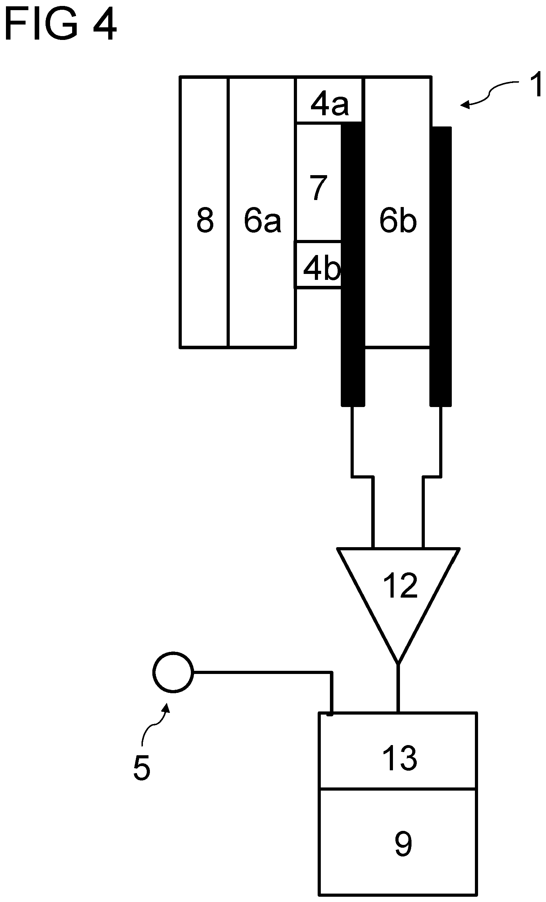

The controller 9 can also connect to an ambient pressure sensor 5. An ambient pressure sensor 5 affords compensation of influences of ambient pressure. FIG 4 shows an ambient pressure sensor 5. The ambient pressure sensor 5 connects to the analog-to-digital converter 13. The analog-to-digital converter 13 reads an analog pressure signal and converts the signal into a digital representation of pressure. The controller 9 then processes the digital representation of pressure. According to an aspect of the instant disclosure, a digital interface connects the ambient pressure sensor 5 to the controller 9.

In a sophisticated embodiment, the ambient pressure sensor 5 connects to a sigma-delta modulation circuit. The sigma-delta modulation circuit reads an analog pressure signal and changes the signal into a digital representation of pressure. The controller 9 then processes the digital representation of pressure.

The concentration of a gas *c_{gas}* is determined by relating a partial pressure *p_{gas}* of the gas to an absolute pressure *p_{absolute}*: ${c}_{gas} = \frac{{p}_{gas}}{{p}_{absolute}}$

The ambient pressure sensor 5 measures the total ambient pressure *p_{absolute}.*

The skilled person readily understand that an ambient sensor can also produce signals indicative of temperature and/or signals indicative of moisture. These temperature and/or moisture signals can be processed in the same fashion or in a similar fashion as described above.

Any steps of a method according to the present disclosure can be embodied in hardware, in a software module executed by a processor, in a software module being executed using operating-system-level virtualization, in a cloud computing arrangement, or in a combination thereof. The software can include a firmware, a hardware driver run in the operating system, or an application program. Thus, the disclosure also relates to a computer program product for performing the operations presented herein. If implemented in software, the functions described can be stored as one or more instructions on a computer-readable medium. Some examples of storage media that can be used include random access memory (RAM), read only memory (ROM), flash memory, EPROM memory, EEPROM memory, registers, a hard disk, a solid state disk, a removable disk, other optical disks, or any available media that can be accessed by a computer or any other IT equipment and appliance.

It should be understood that the foregoing relates only to certain embodiments of the disclosure and that numerous changes can be made therein without departing from the scope of the disclosure as defined by the following claims. It should also be understood that the disclosure is not restricted to the illustrated embodiments and that various modifications can be made within the scope of the following claims.

## Claims

1. A method of estimating a partial pressure outside a gas sensor (1), the gas sensor (1) comprising a reference terminal (2), a pump and sense terminal (3), a first sensor disk (6a), a second sensor disk (6b), one or more spacers (4a, 4b) and a sealed chamber (7), the sealed chamber (7) being enclosed between the first and second sensor disks (6a, 6b), the one or more spacers (4a, 4b) and the reference terminal (2), the reference terminal (2) electrically and mechanically connecting to a first side of the second sensor disk (6b), the pump and sense terminal (3) electrically and mechanically connecting to a second side of the second sensor disk (6b), the second sensor disk (6b) being made from an oxygen-ion solid electrolyte, the method comprises the steps of:
applying a first electric current between the reference terminal (2) and the pump and sense terminal (3) for a first amount of time;
after application of the first electric current, recording a first feedback voltage signal at the pump and sense terminal (3);
applying a second electric current between the reference terminal (2) and the pump and sense terminal (3) for a second amount of time;
after application of the second electric current, recording a second feedback voltage signal at the pump and sense terminal (3);
producing a first measured feedback voltage from the first feedback voltage signal and a second measured feedback voltage from the second feedback voltage signal;
producing an offset voltage by determining a difference between the second measured feedback voltage and the first measured feedback voltage;
producing an error signal by determining a difference between a target offset voltage and the produced offset voltage;
adjusting at least one process variable of a set of process variables, the process variable being selected from:
- the first amount of time,
- the second amount of time,
- the first electric current,
- the second electric current,
- the target offset voltage,
as a function of the error signal to produce a new set of process variables;
using the new set of process variables to apply the first electric current between the reference terminal (2) and the pump and sense terminal (3) for the first amount of time;
after application of the first electric current of the new set of process variables, recording the first feedback voltage signal at the pump and sense terminal (3);
using the new set of process variables to apply the second electric current between the reference terminal (2) and the pump and sense terminal (3) for the second amount of time;
after application of the second electric current of the new set of process variables, recording the second feedback voltage signal at the pump and sense terminal (3);
producing the first measured feedback voltage from the first feedback voltage signal and the second measured feedback voltage from the second feedback voltage signal;
producing the offset voltage by determining the difference between the second measured feedback voltage and the first measured feedback voltage;
iteratively producing error signals, new sets of process variables, first and second feedback voltage signals, first and second measured feedback voltages, and offset voltages until the offset voltage is within a predetermined margin of the target offset voltage; and
estimating the partial pressure outside the gas sensor (1) as an exponential function of the first measured feedback voltage and as an exponential function of the second measured feedback voltage.

2. The method according to claim 1, wherein the method comprises the step of:
iteratively producing error signals, new sets of process variables, first and second feedback voltage signals, first and second measured feedback voltages, and offset voltages until the offset voltage matches the target offset voltage.

3. The method according to any of the claims 1 to 2, wherein
the first electric current has a first direction and the second electric current has a second direction; and
the second direction is opposite the first direction.

4. The method according to any of the claims 1 to 3, wherein the method comprises the steps of:
using the new set of process variables to determine a first final amount of electric charge from the first electric current and from the first amount of time;
using the new set of process variables to determine a second final amount of electric charge from the second electric current and from the second amount of time; and
estimating the partial pressure outside the gas sensor (1) as a function of the first and/or second final amounts of electric charge and as an exponential function of the first measured feedback voltage and as an exponential function of the second measured feedback voltage.

5. The method according to claim 4, wherein the method comprises the step of:
determining the partial pressure outside the gas sensor (1) as a function of the first and/or second final amounts of electric charge and as an exponential function of the first measured feedback voltage and as an exponential function of the second measured feedback voltage.

6. The method according to any of the claims 4 to 5, wherein the method comprises the steps of:
using the new set of process variables to determine by integration a first final amount of electric charge from the first electric current and from the first amount of time; and
using the new set of process variables to determine by integration a second final amount of electric charge from the second electric current and from the second amount of time.

7. The method according to any of the claims 1 to 6, wherein the method comprises the steps of:
after application of the first electric current, recording the first feedback voltage signal between the pump and sense terminal (3) and the reference terminal (2);
after application of the second electric current, recording the second feedback voltage signal between the pump and sense terminal (3) and the reference terminal (2);
after application of the first electric current of the new set of process variables, recording the first feedback voltage signal between the pump and sense terminal (3) and the reference terminal (2); and
after application of the second electric current of the new set of process variables, recording the second feedback voltage signal between the pump and sense terminal (3) and the reference terminal (2).

8. The method according to any of the claims 1 to 7, the method comprising the step of:
producing an offset voltage by calculating a difference between the second measured feedback voltage and the first measured feedback voltage.

9. The method according to any of the claims 1 to 8, the method comprising the step of:
producing an error signal by calculating a difference between a target offset voltage and the produced offset voltage.

10. The method according to any of the claims 1 to 9, the method comprising the steps of:
after application of the first electric current of the new set of process variables, recording the first feedback voltage signal at the pump and sense terminal (3);
using the new set of process variables to apply the second electric current between the reference terminal (2) and the pump and sense terminal (3) for the second amount of time;
after application of the second electric current of the new set of process variables, recording the second feedback voltage signal at the pump and sense terminal (3);
producing the first measured feedback voltage from the first feedback voltage signal and the second measured feedback voltage from the second feedback voltage signal; and
producing the offset voltage by calculating the difference between the second measured feedback voltage and the first measured feedback voltage.

11. The method according to any of the claims 1 to 10, wherein the partial pressure outside the gas sensor (1) is a partial pressure of a gaseous fluid.

12. A gas sensor (1) comprising a reference terminal (2), a pump and sense terminal (3), a first sensor disk (6a), a second sensor disk (6b), one or more spacers (4a, 4b) and a sealed chamber (7), the sealed chamber (7) being enclosed between the first and second sensor disks (6a, 6b), the one or more spacers (4a, 4b) and the reference terminal (2), the reference terminal (2) electrically and mechanically connecting to a first side of the second sensor disk (6b), the pump and sense terminal (3) electrically and mechanically connecting to a second side of the second sensor disk (6b), the second sensor disk (6b) being made from an oxygen-ion solid electrolyte, the gas sensor (1) comprising means adapted to execute the steps of the method of any of the claims 1 to 11.

13. A computer program comprising instructions to cause the gas sensor (1) of claim 12 to execute the steps of any of the methods of the claims 1 to 11.

14. A non-transitory, computer-readable medium having stored thereon the computer program of claim 13.

## Patentansprüche

1. Verfahren zum Schätzen eines Partialdrucks außerhalb eines Gassensors (1), wobei der Gassensor (1) einen Referenzanschluss (2), einen Pump- und Messanschluss (3), eine erste Sensorscheibe (6a), eine zweite Sensorscheibe (6b), einen oder mehrere Abstandhalter (4a, 4b) und eine dichte Kammer (7) umfasst, wobei die dichte Kammer (7) von der ersten und der zweiten Sensorscheibe (6a, 6b), dem einen oder den mehreren Abstandhaltern (4a, 4b) und dem Referenzanschluss (2) umschlossen ist, wobei der Referenzanschluss (2) elektrisch und mechanisch mit einer ersten Seite der zweiten Sensorscheibe (6b) verbunden ist, wobei der Pump- und Messanschluss (3) elektrisch und mechanisch mit einer zweiten Seite der zweiten Sensorscheibe (6b) verbunden ist, wobei die zweite Sensorscheibe (6b) aus einem sauerstoffionenleitenden Feststoffelektrolyten hergestellt ist, wobei das Verfahren folgende Schritte umfasst:
Anlegen eines ersten elektrischen Stroms zwischen dem Referenzanschluss (2) und dem Pump- und Messanschluss (3) für einen ersten Zeitraum;
nach dem Anlegen des ersten elektrischen Stroms Aufzeichnen eines ersten Spannungsrückkopplungssignals am Pump- und Messanschluss (3);
Anlegen eines zweiten elektrischen Stroms zwischen dem Referenzanschluss (2) und dem Pump- und Messanschluss (3) für einen zweiten Zeitraum;
nach dem Anlegen des zweiten elektrischen Stroms Aufzeichnen eines zweiten Spannungsrückkopplungssignals am Pump- und Messanschluss (3);
Erzeugen einer ersten gemessenen Rückkopplungsspannung aus dem ersten Spannungsrückkopplungssignal und einer zweiten gemessenen Rückkopplungsspannung aus dem zweiten Spannungsrückkopplungssignal;
Erzeugen einer Offset-Spannung durch Bestimmen einer Differenz zwischen der zweiten und der ersten gemessenen Rückkopplungsspannung;
Erzeugen eines Fehlersignals durch Bestimmen einer Differenz zwischen einer Soll-Offset-Spannung und der erzeugten Offset-Spannung;
Verstellen mindestens einer aus einem Satz von Prozessvariablen, wobei die Prozessvariable unter folgenden ausgewählt ist:
- dem ersten Zeitraum,
- dem zweiten Zeitraum,
- dem ersten elektrischen Strom,
- dem zweiten elektrischen Strom,
- der Soll-Offset-Spannung,
in Abhängigkeit von dem Fehlersignal zwecks Erzeugens eines neuen Satzes von Prozessvariablen;
Benutzen des neuen Satzes von Prozessvariablen zum Anlegen des ersten elektrischen Stroms zwischen dem Referenzanschluss (2) und dem Pump- und Messanschluss (3) während des ersten Zeitraums;
nach dem Anlegen des ersten elektrischen Stroms mit dem neuen Satz von Prozessvariablen Aufzeichnen des ersten Spannungsrückkopplungssignals am Pump- und Messanschluss (3);
Benutzen des neuen Satzes von Prozessvariablen zum Anlegen des zweiten elektrischen Stroms zwischen dem Referenzanschluss (2) und dem Pump- und Messanschluss (3) während des zweiten Zeitraums;
nach dem Anlegen des zweiten elektrischen Stroms mit dem neuen Satz von Prozessvariablen Aufzeichnen des zweiten Spannungsrückkopplungssignals am Pump- und Messanschluss (3);
Erzeugen der ersten gemessenen Rückkopplungsspannung aus dem ersten Spannungsrückkopplungssignal und der zweiten gemessenen Rückkopplungsspannung aus dem zweiten Spannungsrückkopplungssignal;
Erzeugen der Offset-Spannung durch Bestimmen der Differenz zwischen der zweiten und der ersten gemessenen Rückkopplungsspannung;
iteratives Erzeugen von Fehlersignalen, neuen Sätzen von Prozessvariablen, ersten und zweiten Rückkopplungsspannungssignalen, ersten und zweiten gemessenen Rückkopplungsspannungen und Offset-Spannungen, bis die Offset-Spannung innerhalb einer vorgegebenen Grenze der Soll-Offset-Spannung liegt; und
Schätzen des Partialdrucks außerhalb des Gassensors (1) als Exponentialfunktion der ersten gemessenen Rückkopplungsspannung und als Exponentialfunktion der zweiten gemessenen Rückkopplungsspannung.

2. Das Verfahren nach Anspruch 1, das folgenden Schritt umfasst:
iteratives Erzeugen von Fehlersignalen, neuen Sätzen von Prozessvariablen, ersten und zweiten Rückkopplungsspannungssignalen, ersten und zweiten gemessenen Rückkopplungsspannungen und Offset-Spannungen, bis die Offset-Spannung der Soll-Offset-Spannung entspricht.

3. Das Verfahren nach einem der Ansprüche 1 bis 2, wobei
der erste elektrische Strom eine erste Richtung und der zweite elektrische Strom eine zweite Richtung aufweist; und
die zweite Richtung der ersten entgegengesetzt ist.

4. Das Verfahren nach einem der Ansprüche 1 bis 3, das folgende Schritte umfasst:
Benutzen des neuen Satzes von Prozessvariablen zum Bestimmen einer ersten Endmenge an elektrischer Ladung aus dem ersten elektrischen Strom und dem ersten Zeitraum;
Benutzen des neuen Satzes von Prozessvariablen zum Bestimmen einer zweiten Endmenge an elektrischer Ladung aus dem zweiten elektrischen Strom und dem zweiten Zeitraum; und
Schätzen des Partialdrucks außerhalb des Gassensors (1) in Abhängigkeit von der ersten und/oder der zweiten Endmenge an elektrischer Ladung und als Exponentialfunktion der ersten gemessenen Rückkopplungsspannung und als Exponentialfunktion der zweiten gemessenen Rückkopplungsspannung.

5. Das Verfahren nach Anspruch 4, das folgenden Schritt umfasst:
Bestimmen des Partialdrucks außerhalb des Gassensors (1) in Abhängigkeit von der ersten und/oder der zweiten Endmenge an elektrischer Ladung und als Exponentialfunktion der ersten gemessenen Rückkopplungsspannung und als Exponentialfunktion der zweiten gemessenen Rückkopplungsspannung.

6. Das Verfahren nach einem der Ansprüche 4 bis 5, das folgende Schritte umfasst:
Benutzen des neuen Satzes von Prozessvariablen zum Bestimmen einer ersten Endmenge an elektrischer Ladung aus dem ersten elektrischen Strom und aus dem ersten Zeitraum durch Integration; und
Benutzen des neuen Satzes von Prozessvariablen zum Bestimmen einer zweiten Endmenge an elektrischer Ladung aus dem zweiten elektrischen Strom und aus dem zweiten Zeitraum durch Integration.

7. Das Verfahren nach einem der Ansprüche 1 bis 6, das folgende Schritte umfasst:
nach dem Anlegen des ersten elektrischen Stroms Aufzeichnen des ersten Spannungsrückkopplungssignals zwischen dem Pump- und Messanschluss (3) und dem Referenzanschluss (2);
nach dem Anlegen des zweiten elektrischen Stroms Aufzeichnen des zweiten Spannungsrückkopplungssignals zwischen dem Pump- und Messanschluss (3) und dem Referenzanschluss (2);
nach dem Anlegen des ersten elektrischen Stroms mit dem neuen Satz von Prozessvariablen Aufzeichnen des ersten Spannungsrückkopplungssignals zwischen dem Pump- und Messanschluss (3) und dem Referenzanschluss (2); und
nach dem Anlegen des zweiten elektrischen Stroms mit dem neuen Satz von Prozessvariablen Aufzeichnen des zweiten Spannungsrückkopplungssignals zwischen dem Pump- und Messanschluss (3) und dem Referenzanschluss (2).

8. Das Verfahren nach einem der Ansprüche 1 bis 7, das folgenden Schritt umfasst: Erzeugen einer Offset-Spannung durch Berechnen einer Differenz zwischen der zweiten und der ersten gemessenen Rückkopplungsspannung.

9. Das Verfahren nach einem der Ansprüche 1 bis 8, das folgenden Schritt umfasst: Erzeugen eines Fehlersignals durch Berechnen einer Differenz zwischen einer Soll-Offset-Spannung und der erzeugten Offset-Spannung.

10. Das Verfahren nach einem der Ansprüche 1 bis 9, das folgende Schritte umfasst:
nach dem Anlegen des ersten elektrischen Stroms mit dem neuen Satz von Prozessvariablen Aufzeichnen des ersten Spannungsrückkopplungssignals am Pump- und Messanschluss (3);
Benutzen des neuen Satzes von Prozessvariablen zum Anlegen des zweiten elektrischen Stroms zwischen dem Referenzanschluss (2) und dem Pump- und Messanschluss (3) während des zweiten Zeitraums;
nach dem Anlegen des zweiten elektrischen Stroms mit dem neuen Satz von Prozessvariablen Aufzeichnen des zweiten Spannungsrückkopplungssignals am Pump- und Messanschluss (3);
Erzeugen der ersten gemessenen Rückkopplungsspannung aus dem ersten Spannungsrückkopplungssignal und der zweiten gemessenen Rückkopplungsspannung aus dem zweiten Spannungsrückkopplungssignal; und
Erzeugen der Offset-Spannung durch Berechnen der Differenz zwischen der zweiten und der ersten gemessenen Rückkopplungsspannung.

11. Das Verfahren nach einem der Ansprüche 1 bis 10, wobei es sich bei dem Partialdruck außerhalb des Gassensors (1) um einen Partialdruck eines gasförmigen Fluids handelt.

12. Gassensor (1), der einen Referenzanschluss (2), einen Pump- und Messanschluss (3), eine erste Sensorscheibe (6a), eine zweite Sensorscheibe (6b), einen oder mehrere Abstandhalter (4a, 4b) und eine dichte Kammer (7) umfasst, wobei die dichte Kammer (7) von der ersten und der zweiten Sensorscheibe (6a, 6b), dem einen oder den mehreren Abstandhaltern (4a, 4b) und dem Referenzanschluss (2) umschlossen ist, wobei der Referenzanschluss (2) elektrisch und mechanisch mit einer ersten Seite der zweiten Sensorscheibe (6b) verbunden ist, wobei der Pump- und Messanschluss (3) elektrisch und mechanisch mit einer zweiten Seite der zweiten Sensorscheibe (6b) verbunden ist, wobei die zweite Sensorscheibe (6b) aus einem sauerstoffionenleitenden Feststoffelektrolyten hergestellt ist, wobei der Gassensor (1) Mittel umfasst, die zum Ausführen der Schritte des Verfahrens nach einem der Ansprüche 1 bis 11 ausgelegt sind.

13. Computerprogramm mit Anweisungen, die den Gassensor (1) nach Anspruch 12 dazu veranlassen, die Schritte eines der Verfahren nach Anspruch 1 bis 11 auszuführen.

14. Nichtflüchtiges, computerlesbares Medium, auf dem das Computerprogramm nach Anspruch 13 gespeichert ist.

## Revendications

1. Procédé d'estimation d'une pression partielle à l'extérieur d'un capteur de gaz (1), le capteur de gaz (1) comprenant une borne de référence (2), une borne de pompage et de détection (3), un premier disque de capteur (6a), un deuxième disque de capteur (6b), une ou plusieurs entretoise(s) (4a, 4b) et une chambre étanche (7), la chambre étanche (7) étant renfermée entre les premier et deuxième disques de capteur (6a, 6b), la ou les entretoise(s) (4a, 4b) et la borne de référence (2), la borne de référence (2) se connectant électriquement et mécaniquement à un premier côté du deuxième disque de capteur (6b), la borne de pompage et de détection (3) se connectant électriquement et mécaniquement à un deuxième côté du deuxième disque de capteur (6b), le deuxième disque de capteur (6b) étant réalisé en un électrolyte solide à conduction d'oxygène, le procédé comprend les étapes :
appliquer un premier courant électrique entre la borne de référence (2) et la borne de pompage et de détection (3) pendant une première durée ;
après l'application du premier courant électrique, enregistrer un premier signal de tension de rétroaction au niveau de la borne de pompage et de détection (3) ;
appliquer un deuxième courant électrique entre la borne de référence (2) et la borne de pompage et de détection (3) pendant une deuxième durée ;
après l'application du deuxième courant électrique, enregistrer un deuxième signal de tension de rétroaction au niveau de la borne de pompage et de détection (3) ;
produire une première tension de rétroaction mesurée à partir du premier signal de tension de rétroaction et une deuxième tension de rétroaction mesurée à partir du deuxième signal de tension de rétroaction ;
produire une tension de décalage en déterminant une différence entre la deuxième tension de rétroaction mesurée et la première tension de rétroaction mesurée ;
produire un signal d'erreur en déterminant une différence entre une tension de décalage cible et la tension de décalage produite ;
ajuster au moins une variable de processus d'un ensemble de variables de processus, la variable de processus étant sélectionnée parmi :
- la première durée,
- la deuxième durée,
- le premier courant électrique,
- le deuxième courant électrique,
- la tension de décalage cible,
en tant que fonction du signal d'erreur pour produire un nouvel ensemble de variables de processus ;
utiliser le nouvel ensemble de variables de processus pour appliquer le premier courant électrique entre la borne de référence (2) et la borne de pompage et de détection (3) pendant la première durée ;
après l'application du premier courant électrique du nouvel ensemble de variables de processus, enregistrer le premier signal de tension de rétroaction au niveau de la borne de pompage et de détection (3) ;
utiliser le nouvel ensemble de variables de processus pour appliquer le deuxième courant électrique entre la borne de référence (2) et la borne de pompage et de détection (3) pendant la deuxième durée ;
après l'application du deuxième courant électrique du nouvel ensemble de variables de processus, enregistrer le deuxième signal de tension de rétroaction au niveau de la borne de pompage et de détection (3) ;
produire la première tension de rétroaction mesurée à partir du premier signal de tension de rétroaction et la deuxième tension de rétroaction mesurée à partir du deuxième signal de tension de rétroaction ;
produire la tension de décalage en déterminant la différence entre la deuxième tension de rétroaction mesurée et la première tension de rétroaction mesurée ;
produire de manière itérative des signaux d'erreur, de nouveaux ensembles de variables de processus, un premier et un deuxième signal de tension de rétroaction, une première et une deuxième tension de rétroaction mesurée, et des tensions de décalage jusqu'à ce que la tension de décalage soit dans une marge prédéterminée de la tension de décalage cible ; et
estimer la pression partielle à l'extérieur du capteur de gaz (1) en tant que fonction exponentielle de la première tension de rétroaction mesurée et en tant que fonction exponentielle de la deuxième tension de rétroaction mesurée.

2. Le procédé selon la revendication 1, dans lequel le procédé comprend l'étape :
produire de manière itérative des signaux d'erreur, de nouveaux ensembles de variables de processus, un premier et un deuxième signal de tension de rétroaction, une première et une deuxième tension de rétroaction mesurée, et des tensions de décalage jusqu'à ce que la tension de décalage corresponde à la tension de décalage cible.

3. Le procédé selon l'une des revendications 1 à 2, dans lequel
le premier courant électrique présente une première direction et le deuxième courant électrique présente une deuxième direction ; et
la deuxième direction est opposée à la première direction.

4. Le procédé selon l'une des revendications 1 à 3, dans lequel le procédé comprend les étapes :
utiliser le nouvel ensemble de variables de processus pour déterminer une première quantité finale de charge électrique à partir du premier courant électrique et de la première durée ;
utiliser le nouvel ensemble de variables de processus pour déterminer une deuxième quantité finale de charge électrique à partir du deuxième courant électrique et de la deuxième durée ; et
estimer la pression partielle à l'extérieur du capteur de gaz (1) en tant que fonction des première et/ou deuxième quantités finales de charge électrique et en tant que fonction exponentielle de la première tension de rétroaction mesurée et en tant que fonction exponentielle de la deuxième tension de rétroaction mesurée.

5. Le procédé selon la revendication 4, dans lequel le procédé comprend l'étape :
déterminer la pression partielle à l'extérieur du capteur de gaz (1) en tant que fonction des première et/ou deuxième quantités finales de charge électrique et en tant que fonction exponentielle de la première tension de rétroaction mesurée et en tant que fonction exponentielle de la deuxième tension de rétroaction mesurée.

6. Le procédé selon l'une des revendications 4 à 5, dans lequel le procédé comprend les étapes :
utiliser le nouvel ensemble de variables de processus pour déterminer par intégration une première quantité finale de charge électrique à partir du premier courant électrique et de la première durée ; et
utiliser le nouvel ensemble de variables de processus pour déterminer par intégration une deuxième quantité finale de charge électrique à partir du deuxième courant électrique et de la deuxième durée.

7. Le procédé selon l'une des revendications 1 à 6, dans lequel le procédé comprend les étapes :
après l'application du premier courant électrique, enregistrer le premier signal de tension de rétroaction entre la borne de pompage et de détection (3) et la borne de référence (2) ;
après l'application du deuxième courant électrique, enregistrer le deuxième signal de tension de rétroaction entre la borne de pompage et de détection (3) et la borne de référence (2) ;
après l'application du premier courant électrique du nouvel ensemble de variables de processus, enregistrer le premier signal de tension de rétroaction entre la borne de pompage et de détection (3) et la borne de référence (2) ; et
après l'application du deuxième courant électrique du nouvel ensemble de variables de processus, enregistrer le deuxième signal de tension de rétroaction entre la borne de pompage et de détection (3) et la borne de référence (2).

8. Le procédé selon l'une des revendications 1 à 7, le procédé comprenant l'étape :
produire une tension de décalage en calculant une différence entre la deuxième tension de rétroaction mesurée et la première tension de rétroaction mesurée.

9. Le procédé selon l'une des revendications 1 à 8, le procédé comprenant l'étape :
produire un signal d'erreur en calculant une différence entre une tension de décalage cible et la tension de décalage produite.

10. Le procédé selon l'une des revendications 1 à 9, le procédé comprenant les étapes :
après l'application du premier courant électrique du nouvel ensemble de variables de processus, enregistrer le premier signal de tension de rétroaction au niveau de la borne de pompage et de détection (3) ;
utiliser le nouvel ensemble de variables de processus pour appliquer le deuxième courant électrique entre la borne de référence (2) et la borne de pompage et de détection (3) pendant la deuxième durée ;
après l'application du deuxième courant électrique du nouvel ensemble de variables de processus, enregistrer le deuxième signal de tension de rétroaction au niveau de la borne de pompage et de détection (3) ;
produire la première tension de rétroaction mesurée à partir du premier signal de tension de rétroaction et la deuxième tension de rétroaction mesurée à partir du deuxième signal de tension de rétroaction ; et
produire la tension de décalage en calculant la différence entre la deuxième tension de rétroaction mesurée et la première tension de rétroaction mesurée.

11. Le procédé selon l'une des revendications 1 à 10, dans lequel la pression partielle à l'extérieur du capteur de gaz (1) est une pression partielle d'un fluide gazeux.

12. Capteur de gaz (1) comprenant une borne de référence (2), une borne de pompage et de détection (3), un premier disque de capteur (6a), un deuxième disque de capteur (6b), une ou plusieurs entretoise(s) (4a, 4b) et une chambre étanche (7), la chambre étanche (7) étant renfermée entre les premier et deuxième disques de capteur (6a, 6b), la ou les entretoise(s) (4a, 4b) et la borne de référence (2), la borne de référence (2) se connectant électriquement et mécaniquement à un premier côté du deuxième disque de capteur (6b), la borne de pompage et de détection (3) se connectant électriquement et mécaniquement à un deuxième côté du deuxième disque de capteur (6b), le deuxième disque de capteur (6b) étant réalisé en un électrolyte solide à conduction d'oxygène, le capteur de gaz (1) comprenant des moyens adaptés pour exécuter les étapes du procédé selon l'une des revendications 1 à 11.

13. Programme informatique comprenant des instructions pour amener le capteur de gaz (1) selon la revendication 12 à exécuter les étapes de l'un des procédés des revendications 1 à 11.

14. Support non-transitoire lisible par ordinateur sur lequel est stocké le programme informatique selon la revendication 13.
